# EUROPÄISCHE PATENTANMELDUNG

(11) **EP 4 840 615 A1**
(43) Veröffentlichungstag der Anmeldung: **18.11.2026**
(21) Anmeldenummer: 25176214.2
(22) Anmeldetag: 13.05.2025
(51) Int. Cl.: B29C 63/34

(54) **RUNDBODENSACK FÜR EIN SPUNDFASS UND VERFAHREN ZUM VORBEREITEN EINES RUNDBODENSACKS ZUM EINBRINGEN IN EIN SPUNDFASS**

(71) Anmelder: Roundliner Gesellschaft für umweltfreundliche Verpackungen mbH, 76694 Forst (DE)
(72) Erfinder: MAX, Thomas, 76689 Karlsdorf (DE); MÜLLER, Katrin, 06112 Halle/Saale (DE); HOFMANN, Bernhard, 52525 Heinsberg (DE)
(74) Vertreter: LBP Lemcke, Brommer & Partner Patentanwälte mbB

(57) **Zusammenfassung**

Die Erfindung betrifft ein Verfahren zum Vorbereiten eines Rundbodensacks 1 für ein Spundfass 10 mit einer inneren Fasshöhe 12, umfassend die folgenden Verfahrensschritte:
- Bereitstellen eines flexiblen geschlossenen Rundbodensacks 1 mit einem Oberboden 2, einem Unterboden 3 und einem Mantel 8, wobei der Oberboden 2 und der Unterboden 3 mittels des Mantels 8 verbunden sind und der Oberboden 2 eine Öffnung 4 aufweist;
- flaches Ausrichten des Rundbodensacks 1 auf einer Auflageebene 20, wobei der Rundbodensack 1 sich im Wesentlichen entlang einer Erstreckungsachse 5 parallel zur Auflageebene 20 erstreckt, wobei die Erstreckungsachse 5 durch die Öffnung 4 sowie durch den Unterboden 3 verläuft und den Rundbodensack 1 in zwei im Wesentlichen gleich große Hälften unterteilt;
- Falten des Rundbodensacks 1 senkrecht oder winklig zu der Erstreckungsachse 5, sodass der flach ausgerichtete Rundbodensack 1 entlang der Erstreckungsachse 5 kürzer als die innere Fasshöhe 12 ist;
- Aufrollen beider Hälften des Rundbodensacks 1 um jeweils eine parallel zur Erstreckungsachse 5 verlaufende Achse zur Erstreckungsachse 5 hin.

Die Erfindung betrifft auch einen geschlossenen Rundbodensack 1, der nach dem genannten Verfahren hergerichtet ist, und ein Verfahren zum Einbringen eines gefalteten geschlossenen Rundbodensacks 1 in ein Spundfass 10.

## Beschreibung

Die vorliegende Erfindung betrifft ein Verfahren zum Vorbereiten eines Rundbodensacks zum Einbringen in ein Spundfass, einen solcherart vorbereiteten Rundbodensack sowie ein Verfahren zum Einbringen eines solcherart vorbereiteten Rundbodensack in ein Spundfass.

Spundfässer werden zum Transport und zur Lagerung von Füllgut, insbesondere von Flüssigkeiten in der Chemie- und Lebensmittelindustrie und weiteren Industrien verwendet. Spundfässer besitzen ein Spundloch zum Eingeben und Ausgeben von Füllgut und können weitere Öffnungen aufweisen, insbesondere zum Entlüften. Wird ein Spundfass befüllt und nach Gebrauch entleert, dann können im Fassinneren Rückstände eines Füllguts verbleiben, welche für eine weitere Befüllung eine Verunreinigung darstellen. Vor einer weiteren Befüllung müssen Rückstände daher aus einem Spundfass entfernt werden.

Solche Rückstände können durch eine Reinigung, beispielsweise durch Ausspülen, entfernt werden. Dies setzt Mittel zum Durchführen einer Reinigung voraus und verursacht zusätzlichen Aufwand. Ein Verwender eines Spundfasses ist häufig ein kleines oder mittleres Unternehmen, welches Füllgut bestellt hat und das Füllgut in einem Spundfass erhält. Solche Unternehmen besitzen üblicherweise keine Reinigungsanlage für Spundfässer, sodass hinsichtlich einer Wiederverwendung eines gebrauchten Spundfasses nur ein Rücktransport möglich ist. Da der Rücktransport aber häufig teurer ist als eine Entsorgung, werden gebrauchte Spundfässer oft schon nach einmaligem Gebrauch entsorgt. So entsteht vermeidbarer Abfall und auch Kosten, da für einen weiteren Gebrauch ein neues Spundfass beschafft werden muss.

Alternativ zum einmaligen Gebrauch und Entsorgen eines Spundfasses werden Fassliner in Stahlfässern mit abnehmbarem Deckel eingesetzt. Ein Fassliner ist ein Einwegprodukt und kleidet ein Fassinneres aus, sodass in ein Fass eingegebenes Füllgut nicht in Kontakt mit dem Fass kommt. Der Fassliner ist typischerweise ein aus flexibler Folie gefertigter Rundbodensack, dessen Geometrie in einem befüllten Zustand etwa dem Fassinneren entspricht. Wie auch das Fass besitzt der Rundbodensack somit einen Mantel und einen Unterboden. Der Sack ist oben offen, sodass Füllgut eingegeben werden kann. Nach einem Gebrauch verbleiben Rückstände im Rundbodensack, während das Fassinnere sauber bleibt. Der Rundbodensack wird entsorgt und das Fass kann ohne aufwendige Reinigung wiederverwendet werden.

Der Rundbodensack kann bei abgenommenem Deckel eingesetzt und ein Überstand über einen oberen Rand des Mantels des Fasses gestülpt werden. Ein solcher Rundbodensack ist beispielsweise aus der DE 10 2013 220 381 A1 bekannt. Durch Aufsetzen und Verspannen des Deckels wird der Rundbodensack im Fass fixiert. Fässer mit abnehmbarem Deckel sind jedoch teurer als Spundfässer, sodass wiederum höhere Kosten anfallen als bei einer Verwendung eines Spundfasses, das nach Gebrauch entsorgt wird. Daher ist es wünschenswert, einen Rundbodensack in einem Spundfass einzusetzen.

Spundfässer werden nicht zwingend stehend gelagert, sodass Füllgut auch in Kontakt mit demjenigen Ende des Spundfasses kommen kann, welches dem Deckel des vorbeschriebenen Fasses entspricht. Ein oben offener Rundbodensack verhindert somit nicht, dass das Fassinnere durch Füllgut verunreinigt wird. Für ein Spundfass muss daher ein auch oberseitig verschließbarer Rundbodensack verwendet werden. Ein derartiger geschlossener Rundbodensack weist zusätzlich zu dem Unterboden und dem Mantel auch einen Oberboden auf. Am Oberboden ist in der Regel eine Öffnung angeordnet, durch welche Füllgut in den geschlossenen Rundbodensack eingegeben werden kann.

Zum Einbringen eines geschlossenen Rundbodensacks in ein Spundfass muss der Fassliner in eine Form gebracht werden, in welcher er durch ein Spundloch geführt werden kann. Ein Spundloch zum Eingeben von Füllgut, und häufig auch zumindest ein weiteres Spundloch zum Entlüften, ist am Oberboden eines Spundfasses angeordnet. Jedoch ist das Spundloch typischerweise nicht symmetrisch am Oberboden angeordnet, sondern exzentrisch zum Mantel hin versetzt. Dadurch ergibt sich eine Asymmetrie der Position des Spundlochs bezüglich einer Fassgeometrie, welche ein zuverlässiges Entfalten eines eingesetzten Rundbodensacks erschwert. Bei einem Befüllen eines Spundfasses könnte sich ein unsachgemäß vorbereiteter, beispielsweise notdürftig gefalteter Fassliner nicht vollständig entfalten und Lufttaschen bilden, die unter einer Gewichtskraft von Füllgut einreißen können. Unsachgemäßes Vorbereiten zum Einbringen in das Spundloch gefährdet daher einen zuverlässigen Einsatz des Rundbodensacks.

Es ist denkbar, einen geschlossenen Rundbodensack, der in ein Spundfass eingegeben wurde, vor einem Befüllen durch Aufblasen mittels Druckluft zu entfalten. Solange im geschlossenen Rundbodensack ein Überdruck anliegt, kann der geschlossenen Rundbodensack das Spundfass auskleiden und dabei eine Bildung von Lufttaschen vermeiden. Sobald der Überdruck aber absinkt, fällt der geschlossenen Rundbodensack in sich zusammen, sodass die Gefahr besteht, dass sich der geschlossene Rundbodensack bei einem Befüllen des Spundfasses nicht vollständig entfaltet. Zudem sind Mittel zum Herstellen eines Überdrucks vonnöten.

Der vorliegenden Erfindung liegt daher die Aufgabe zugrunde, eine Vorgehensweise beim Vorbereiten eines geschlossene Rundbodensacks vorzuschlagen, die gewährleistet, dass der geschlossene Rundbodensack durch das Spundloch eines Spundfasses in dieses eingebracht werden kann und sich bei einem Befüllen zuverlässig entfaltet, sowie einen vorbereiteten geschlossenen Rundbodensack zu diesem Zweck bereitzustellen. Eine weitere Aufgabe der Erfindung liegt darin, ein Verfahren zum Einbringen eines geschlossenen Rundbodensacks in ein Spundfass vorzuschlagen.

Gelöst ist die erstgenannte Aufgabe durch ein Verfahren zum Vorbereiten eines geschlossenen Rundbodensacks mit den Merkmalen des Patentanspruchs 1 sowie durch einen Rundbodensack mit den Merkmalen des Patentanspruchs 8. Bevorzugte Ausgestaltungen des erfindungsgemäßen Verfahrens zum Falten eines Rundbodensacks finden sich in den Ansprüchen 2 bis 7; vorteilhafte Weiterbildungen des erfindungsgemäßen Rundbodensacks sind in den Ansprüchen 9 bis 11 niedergelegt.

Die zweite Aufgabe ist durch ein Verfahren mit den Merkmalen des Patentanspruchs 13 gelöst. Vorteilhafte Ausführungsformen dieses erfindungsgemäßen Verfahrens ist im Anspruch 14 und 15 dargelegt.

Wie vorstehend beschrieben, ist ein erfindungsgemäßer Fassliner für ein Spundfass ein geschlossener Rundbodensack mit einem Oberboden, einem Unterboden und einem Mantel. Der Rundbodensack weist in einem befüllten Zustand eine Geometrie auf, die einem Fassinneren eines Spundfasses entspricht, im Allgemeinen also eine zylindrische Geometrie. Die vorliegende Erfindung betrifft allerdings nicht nur Rundbodensäcke für zylindrische Spundfässer, sondern erstreckt sich auch auf bauchige sowie konische Fassformen. Der umlaufende Mantel des Rundbodensacks ist an einem Ende mit dem Oberboden und an einem dem Oberboden gegenüberliegenden Ende mit dem Unterboden verbunden. Der Oberboden des Rundbodensacks besitzt eine Öffnung, die so angeordnet ist, dass sie der Position eines Spundlochs zum Eingeben von Füllgut entspricht.

Der Rundbodensack ist aus einer flexiblen Folie gefertigt und liegt ohne Befüllung mangels Formsteifigkeit in sich zusammengesackt vor. In einem ersten Verfahrensschritt der vorliegenden Erfindung wird der ungefüllte Rundbodensack auf einer Auflageebene flach ausgerichtet. Bei der flachen Ausrichtung liegt der Rundbodensack teilweise glatt vor, sodass sich, mit Ausnahme eines Bereichs um die Öffnung, senkrecht zur Auflageebene eine minimale Höhe ergibt, welche in etwa zwei Lagen der Folie entspricht. Im Allgemeinen ergeben sich zudem geringfügige Erhebungen durch Verwerfungen der Folie oder durch Überlappung mehrerer Folienlagen.

Der Rundbodensack wird derart ausgerichtet, dass der der Mantel zumindest teilweise zwischen dem Oberboden und dem Unterboden gestreckt vorliegt. Zudem wird der Rundbodensack so ausgerichtet, dass sich eine durch die Öffnung und durch den Unterboden verlaufende Erstreckungsachse ergibt, welche den Rundbodensack in zwei im Wesentlichen gleich große Hälften unterteilt. Die Erstreckungsachse verläuft aufgrund der flachen Ausrichtung notwendigerweise parallel zu der Auflageebene.

Weiter wird der Rundbodensack - einmalig oder mehrfach - winklig oder vorzugsweise senkrecht zu der Erstreckungsachse gefaltet. Dabei wird jeweils ein Teil des Rundbodensacks so gefaltet, dass gebildete Falze parallel zur Auflageebene verlaufen und mit der Erstreckungsachse einen Winkel einschließen. Bei einem Falten senkrecht zu der Erstreckungsachse beträgt der Winkel etwa 90°. Nach einem solchem Falten liegt der Rundbodensack weiterhin in einer flachen Form vor, wobei sich durch Verwerfungen und Überlappung von Folienlagen auch Erhebungen ergeben.

Der Rundbodensack ist vorgesehen, in ein Spundfass mit einer inneren Fasshöhe eingegeben zu werden, und Versuche der Anmelderin haben ergeben, dass es für ein zuverlässiges Entfalten wesentlich ist, dass in einem eingegebenen Zustand der Rundbodensack nicht auf dem Boden des Spundfasses aufsitzt. Andernfalls wird durch Reibung des Rundbodensacks am Fassboden ein zuverlässiges Entfalten beeinträchtigt. Der Rundbodensack wird daher zunächst so gefaltet, dass er nach dem winkligen oder senkrechten Falten kürzer ist als die innere Fasshöhe des Spundfasses, für dessen Auskleidung der Rundbodensack vorgesehen ist.

Wie zuvor beschrieben, unterteilt die Erstreckungsachse, die durch die Öffnung und den Unterboden verläuft, den Rundbodensack in zwei im Wesentlichen gleich große Hälften, welche von der Erstreckungsachse aus betrachtet beidseitig nach außen weisen. Nach dem voranstehend beschriebenen Falten werden nun diese Hälften von beiden Seiten her jeweils um eine etwa parallel zur Erstreckungsachse verlaufende Achse zur Erstreckungsachse hin aufgerollt, um den Rundbodensack in eine Form zu bringen, mit der er in das Spundloch eingeführt werden kann.

Durch das erfindungsgemäße Verfahren wird der Rundbodensack in eine Form gebracht, von der aus sich bei einem Befüllen mit Füllgut zunächst die aufgerollten Hälften entrollen bevor sich die gefalteten Teile des Rundbodensacks entlang der Erstreckungsachse entfalten. Hierbei ist beachtlich, dass ein Spundloch üblicherweise nicht mittig am Oberboden eines Spundfasses angeordnet ist, sondern exzentrisch zu einem Rand des Oberbodens hin versetzt ist. Dadurch muss das Entfalten des Rundbodensacks bei einem Befüllen asymmetrisch in den freien Raum eines Fassinneren hinein erfolgen. Das erfindungsgemäße Verfahren bietet den Vorteil, dass eine Entfaltung des Rundbodensacks in radialer Richtung asymmetrisch bezüglich einer Symmetrieachse des Spundfasses unter Vermeidung von Reibung am Fassboden erreicht wird.

Bevorzugt wird der Rundbodensack derart senkrecht oder winklig zu der Erstreckungsachse gefaltet, dass der flach ausgerichtete Rundbodensack entlang der Erstreckungsachse kürzer als 865 mm, und besonders bevorzugt kürzer als 85 cm ist. Damit ist er kürzer als eine innere Fasshöhe eines standardisierten Spundfasses mit 216,5 I Fassungsvermögen, sodass für solche Fassmaße ein zuverlässiges Entfalten beim Befüllen erzielt wird.

Die vorliegende Erfindung ist jedoch nicht auf Rundbodensäcke für standardisierte Spundfässer mit 216,5 I Fassungsvermögen beschränkt, sondern umfasst in entsprechender Weise auch Rundbodensäcke mit Abmessungen, die an die jeweiligen Fassmaße von Spundfässern anderer Fassungsvermögen und Formen (bauchig, konisch) angepasst sind, sowie Verfahren, bei denen der Rundbodensack so gefaltet wird, dass er kürzer ist als die jeweilige innere Fasshöhe des entsprechenden Spundfasses.

Auf verschiedene Weisen kann der Rundbodensack winklig oder senkrecht zur Erstreckungsachse gefaltet werden, sodass er kürzer ist als eine innere Fasshöhe. In einer bevorzugten Ausführungsform des erfindungsgemäßen Verfahrens wird dazu der Unterboden senkrecht oder winklig zu der Erstreckungsachse umgeschlagen, sodass Flächennormalen zumindest zweier Bereiche des Unterbodens in entgegengesetzte Richtungen bezogen auf die Auflageebene weisen. Nach diesem Falten liegt der Rundbodensack weiterhin flach vor, wobei zumindest ein Falz quer durch den Unterboden verläuft. Der Falz unterteilt den Unterboden in einen Bereich, dessen Flächennormale zur Auflageebene gewandt ist, und in einen weiteren Bereich, dessen Flächennormale von der Auflageebene weg weist. Dieses Falten ist auf einfache Weise ausführbar und erfordert nur eine geringe Anzahl an Faltungen. Dadurch kann das Verfahren in einer kürzeren Zeit durchgeführt werden, als dies bei einer größeren Anzahl an notwendigen Faltungen möglich ist.

Bevorzugt wird der Oberboden vor einem Falten derart drapiert, dass Flächennormalen zumindest zweier Bereiche des Oberbodens in entgegengesetzte Richtungen bezogen auf die Auflageebene weisen und die Öffnung in etwa parallel zu der Erstreckungsachse ausgerichtet ist. Somit wird sichergestellt, dass die Öffnung nach Durchführung des Verfahrens ganz am Rand eines Endes des hergerichteten Rundbodensacks liegt.

Der hergerichtete bzw. vorbereitete Rundbodensack soll bei einer späteren Verwendung in ein Spundfass eingegeben werden. Die größte Öffnung eines Spundfasses ist ein Spundloch zum Eingeben von Füllgut. In einer vorteilhaften Ausführung des Verfahrens wird der Rundbodensack so vorbereitet bzw. hergerichtet, dass er nach dem beidseitigen Aufrollen senkrecht zu der Erstreckungsachse eine maximale Ausdehnung aufweist, die kleiner ist als ein Durchmesser eines Spundlochs. Dies ermöglicht, dass der Rundbodensack entlang der Erstreckungsachse durch ein Spundloch einführbar ist. Bevorzugt weist der Rundbodensack eine maximale Ausdehnung von weniger als 56 mm auf, sodass er in ein Spundloch mit einem üblichen Maß einführbar ist.

In einer vorteilhaften Ausführungsform des Verfahrens wird vor dem Falten ein Füllstutzen an der Öffnung des Rundbodensacks befestigt. Dadurch ist es möglich, den Rundbodensack in einem eingegebenen Zustand mittels des Füllstutzens an einem gegenstückigen Element eines Spundfasses, insbesondere am Spundloch, zu halten. Alternativ wird anstatt eines Füllstutzens ein zusätzliches Schlauchstück an der Öffnung befestigt. Das zusätzliche Schlauchstück weist zumindest in der Nähe der Öffnung ungefähr einen Durchmesser auf, der dem Durchmesser eines Spundlochs entspricht. Im eingesetzten Zustand ragt das Schlauchstück durch das Spundloch und es kann als sichere Leitung für Füllgut verwendet werden. Bevorzugt wird der Füllstutzen oder das Schlauchstück durch Schweißen oder Kleben an der Öffnung befestigt.

Optional wird vor dem Befestigen des Füllstutzens oder des Schlauchstücks ein Verstärkungsring um die Öffnung herum angebracht, insbesondere durch Schweißen oder Kleben. Dies ist vorteilhaft, da damit ein Unterschied einer Materialdicke am Übergang der Folie zum Füllstutzen oder zum Schlauchstück ausgeglichen und somit eine Stabilität der Befestigung, beispielsweise einer Schweißnaht, erhöht wird. Bevorzugt ist der Verstärkungsring aus demselben Material gefertigt wie der Rundbodensack. Somit kann auf einen Einsatz unterschiedlicher Materialien verzichtet werden, was günstig für eine Beschaffung ist und Kosten eingespart werden.

Die Erfindung betrifft weiter einen gefalteten Rundbodensack für ein Spundfass, wobei der Rundbodensack mittels des vorbeschriebenen Verfahrens vorbereitet bzw. hergerichtet wurde. Vorteilhafte Ausführungsformen des Verfahrens betreffen daher ebenso den mittels des Verfahrens hergerichteten Rundbodensack.

In einer weiteren vorteilhaften Weiterbildung ist der Rundbodensack aus Kunststofffolie gefertigt. Kunststofffolie ist weitläufig verfügbar, leicht, flexibel, chemisch beständig und kann günstig bezogen werden. Für den Rundbodensack fallen daher besonders geringe Kosten an und die Flexibilität erlaubt ein einfaches Falten oder Vorbereiten bzw. Herrichten. Bevorzugt ist der Rundbodensack aus einem Polyolefin, und besonders bevorzugt aus Low-Density-Polyethylen (LDPE), gefertigt. Je nach Anwendungsfall kann der Rundbodensack vorteilhafterweise auch aus Mehrschichtfolien, insbesondere Coextrusionsfolien, oder Barrierefolien mit beispielsweise einer Metallfolie als Barriereschicht, oder allgemein als Verbundfolie, insbesondere als Folienlaminat gefertigt sein.

Ein Spundloch ist üblicherweise exzentrisch am Oberboden eines Spundfasses angeordnet. Damit der gefaltete Rundbodensack sich bei einem Befüllen zuverlässig entfaltet, kann daher der Füllstutzen ein Orientierungselement aufweisen. Anhand des Orientierungselements ist eine Ausrichtung des Rundbodensacks senkrecht zu der Erstreckungsachse ablesbar. Bevorzugt ist dieses Orientierungselement dazu ausgebildet, mit einem gegenstückigen Orientierungselement eines Spundfasses zusammenzuwirken. Bei einem späteren Eingeben des Rundbodensacks in ein Spundfass kann der Rundbodensack abhängig vom Orientierungselement ausgerichtet werden, sodass ein zuverlässiges Entfalten (und Entrollen) in das Fassinnere hinein unter Berücksichtigung der exzentrischen Lage des Rundbodensacks möglich ist. Es wird somit ein besonders sicheres Entfalten des Rundbodensacks erreicht.

Zudem betrifft die Erfindung ein Verfahren zum Einbringen eines geschlossenen Rundbodensacks in ein Spundfass. Der Rundbodensack ist gemäß dem vorbeschriebenen Verfahren gefaltet und gerollt, also vorbereitet bzw. hergerichtet worden und besitzt daher die Vorteile dieses Verfahrens. Der Rundbodensack weist einen Füllstutzen an der Öffnung auf. Dieser Füllstutzen besitzt ein Orientierungselement. Beim Einbringen in das Spundfass wird der hergerichtete Rundbodensack entlang der Erstreckungsachse durch ein Spundloch geführt, bis der Rundbodensack sich vollständig in einem Inneren des Spundfasses befindet. Der Füllstutzen ragt dabei aus dem Spundloch hervor. Der Rundbodensack wird zudem abhängig von dem Orientierungselement in dem Spundfass ausgerichtet. Dies kann beispielsweise erfolgen, indem der Füllstutzen um die Erstreckungsachse rotiert wird, bis das Orientierungselement in eine Richtung weist, in der sich der Rundbodensack optimal entfalten kann. Dadurch wird ein zuverlässiges Entfalten des Rundbodensacks unter Berücksichtigung der exzentrischen Position des Spundlochs ermöglicht.

Bevorzugt umfasst das Verfahren zum Einbringen eines Rundbodensacks in ein Spundfass ein Zusammenwirken des Füllstutzens mit dem Spundloch, durch das der Rundbodensack geführt wird. Durch das Zusammenwirken wird der Rundbodensack an dem Spundloch gehalten, sodass die Öffnung des Rundbodensacks fluchtend am oder im Spundloch liegt. Somit ist über das Spundloch ein inneres Volumen des Rundbodensacks für Füllgut zugänglich, während eingegebenes Füllgut nicht in Kontakt mit dem Spundfass kommt. Dies bietet den Vorteil, dass ein Befüllen ermöglicht wird, bei dem das Spundfass nicht durch Füllgut verunreinigt wird und das Spundfass somit mehrfach verwendet werden kann. Gleichzeitig kann sich der Rundbodensack durch das Einfüllen des Füllgutszuverlässig entfalten.

Die Erfindung betrifft weiter ein Verfahren zum Befüllen eines Spundfasses. In das Spundfass wurde dabei - wie zuvor beschrieben - ein hergerichteter Rundbodensack eingegeben. Bei dem Befüllen wird durch das Spundloch Füllgut in das Spundfass eingegeben, welches durch einen Füllstutzen in den Rundbodensack geleitet wird. Mit ansteigender Gewichtskraft eingegebenen Füllguts entfaltet sich der Rundbodensack, wobei der Rundbodensack sich größtenteils zuerst in radialer Richtung bezüglich der Erstreckungsachse entfaltet bzw. entrollt, bevor der Unterboden sich entfaltet. Dadurch wird Reibung des Rundbodensacks am Unterboden des Spundfasses vermieden und somit die Sicherheit beim Entfalten erhöht.

Ein Ausführungsbeispiel des erfindungsgemäßen Verfahrens zum Falten eines Rundbodensacks sowie ein Ausführungsbeispiel des Verfahrens zum Einbringen in ein Spundfass werden anhand der beigefügten Zeichnungen näher beschrieben und erläutert. Diese Ausführungen schränken die Tragweite und Bedeutung der voranstehenden Beschreibung der Erfindung und der Patentansprüche nicht ein, können jedoch weitere erfindungsgemäße Merkmale enthalten.

Es zeigen:
- Figur 1: eine Darstellung eines Rundbodensacks in einem befüllten Zustand;
- Figuren 2a bis 2e: Darstellungen eines Rundbodensacks während eines Verfahrens zum Falten des Rundbodensacks;
- Figur 3: eine Außenansicht eines Spundfasses bei einem Verfahren zum Einbringen eines Rundbodensacks in das Spundfass;
- Figur 4: eine Schnittansicht eines geschlossenen Spundfasses mit eingebrachtem Rundbodensacks in befülltem Zustand.

Die Figuren zeigen schematische Darstellungen und sind weder maßstabsgetreu noch verhältnisgetreu hinsichtlich der beispielhaften Dimensionen.

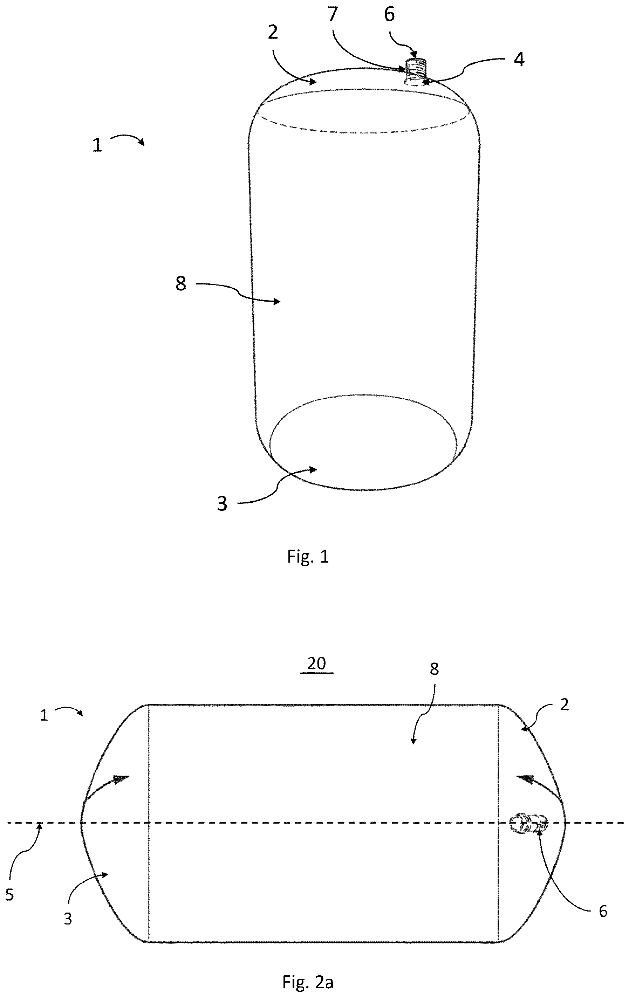

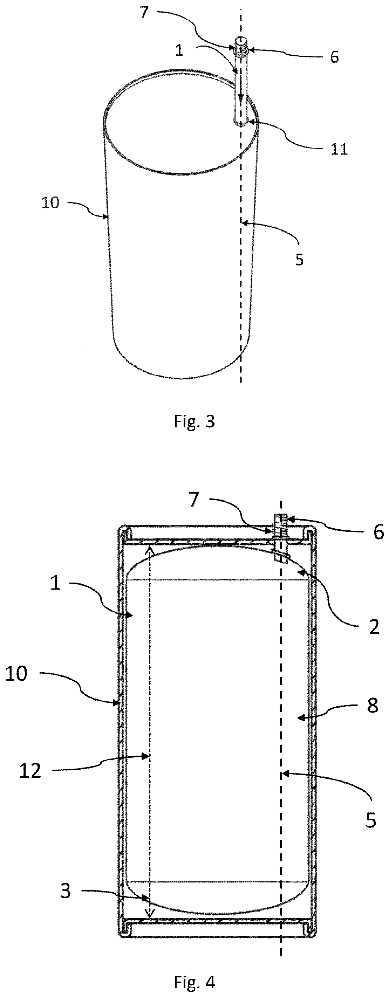

Figur 1 zeigt ein Ausführungsbeispiel eines geschlossenen Rundbodensacks 1 in einem befüllten Zustand. Der Rundbodensack 1 besitzt einen Oberboden 2 und einen Unterboden 3, welche mittels eines Mantels 8 miteinander verbunden sind. In dem befüllten Zustand weist der Rundbodensack 1 eine im Wesentlichen zylindrische Geometrie auf. Der Rundbodensack 1 ist umlaufend verschlossen, wobei sein Innenraum durch eine Öffnung 4 am Oberboden 2 zugänglich ist. Die Geometrie des Rundbodensacks 1 entspricht einem Fassinneren eines Spundfasses 10 (Figur 3). Ein solches Spundfass 10 besitzt ein Spundloch 11 (Figur 3) zum Eingeben von Füllgut, welches exzentrisch am Oberboden angeordnet ist. Der Geometrie eines Spundfasses 10 folgend, ist die Öffnung 4 des Rundbodensacks 1 zu einem Rand des Oberbodens 2 hin versetzt, um schlüssig mit einem Spundloch 11 verbunden zu werden. An der Öffnung 4 ist ein Füllstutzen 6 befestigt. Der Füllstutzen 6 weist ein Orientierungselement 7 auf, welches ausgehend vom Füllstutzen 6 in Richtung eines Mittelpunkts des Oberbodens 2 weist. Der Rundbodensack 1 besteht hier aus einer geblasenen Folie aus Low-Density-Polyethylen mit einer Dicke von 100 µm und einem spezifischen Gewicht von 0,92 kg/m²/s².

In den Figuren 2a bis 2e ist jeweils ein geschlossener Rundbodensack 1 in unterschiedlichen Formen während einer beispielhaften Ausführung des erfindungsgemäßen Verfahrens zum Vorbereiten bzw. Herrichten gezeigt. Die Blickrichtung verläuft jeweils senkrecht zu einer Auflageebene 20. Der Rundbodensack 1 weist wiederum einen Oberboden 2 und einen Unterboden 3 auf, welche jeweils mit gegenüberliegenden Enden eines Mantels 8 verbunden sind, wobei der Oberboden 2 eine Öffnung 4 besitzt. Nicht dargestellt ist ein erster Verfahrensschritt, in dem an der Öffnung 4 ein Verstärkungsring aufgebracht und an der Öffnung 4 ein Füllstutzen 6 mittels Pulsschweißen befestigt wird. Der Füllstutzen 6 weist einen Vorsprung auf, der als Orientierungselement 7 dient.

Zunächst wird der Rundbodensack 1, wie in Figur 2a dargestellt, flach auf der Auflageebene ausgerichtet, sodass sich durch die Öffnung 4 bzw. den Füllstutzen 6 und den Unterboden 3 eine Erstreckungsachse 5 ergibt, welche den Rundbodensack 1 in zwei im Wesentlichen gleich große Hälften unterteilt. Das Ausrichten erfolgt abhängig von dem Vorsprung, bzw. des Orientierungselements 7 an dem Füllstutzen 6 (hier nicht sichtbar), indem der Rundbodensack 1 so ausgerichtet wird, dass das Orientierungselement 7 senkrecht von der Auflageebene 20 wegweist.

Ein Bereich des Unterbodens 3 wird zum Oberboden 2 hin gefaltet. Dieses Falten verläuft in etwa senkrecht zu der Erstreckungsachse 5. Alternativ könnte auch winklig bezüglich der Erstreckungsachse 5 oder auch mehrfach gefaltet werden.

Der Oberboden 2 wird so drapiert, dass der Füllstutzen 6 - und somit auch die Öffnung 4 - etwa parallel zu der Erstreckungsachse ausgerichtet sind. Die Öffnung 4 ist exzentrisch am Oberboden 2 angeordnet, sodass sich ein Bereich mit dem kürzesten Abschnitt des Oberbodens vom Rand bis zur Öffnung und ein Bereich mit dem längsten Abschnitt ergibt. Der Oberboden 2 wird so drapiert, dass eine Flächennormale des Bereichs mit dem kürzesten Abschnitt zu der Auflageebene 20 hinweist. Der Bereich mit dem längsten Abschnitt wird zum Unterboden 3 hin umgeschlagen. Seine Flächennormale weist nach dem Umschlagen von der Auflageebene 20 weg.

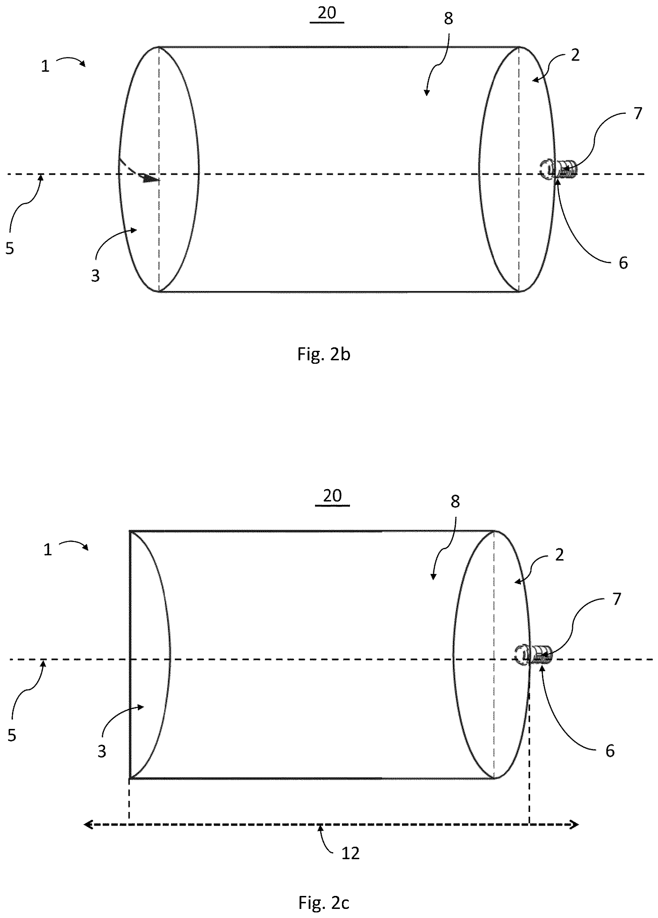

In Figur 2b ist der Rundbodensack 1 im Zustand nach dem vorherigen Ausrichten und Drapieren des Oberbodens 2 gezeigt. Anhand dieser Darstellung ist das senkrecht von der Auflageebene 20 wegweisende Orientierungselement 7 am Füllstutzen 6 erkennbar. Der Unterboden 3 weist noch einen Bereich auf, in dem er über den Mantel 8 hinaussteht. Dieser Bereich wird nun zur Auflageebene 20 hin und senkrecht zur Erstreckungsachse 5 gefaltet.

Figur 2c zeigt den Rundbodensack 1 nach der Faltung des Unterbodens 3 zur Auflageebene hin. Der Oberboden 2 und der Unterboden 3 weisen jeweils einen Bereich auf, der zur Auflageebene gewandt ist, und einen weiteren Bereich, der der Auflageebene abgewandt ist. So gefaltet, ist der Rundbodensack 1 entlang der Erstreckungsachse 5 kürzer als ein Höhenmaß, das einer inneren Fasshöhe 12 eines standardisierten Spundfasses entspricht. Der Rundbodensack 1 misst in diesem Beispiel, das für ein standardisiertes Spundfass mit 216,5 I Fassungsvermögen vorgesehen ist, entlang der Erstreckungsachse 5 nun 85 cm, wodurch er kürzer ist als die innere Fasshöhe 12 dieses Spundfasses.

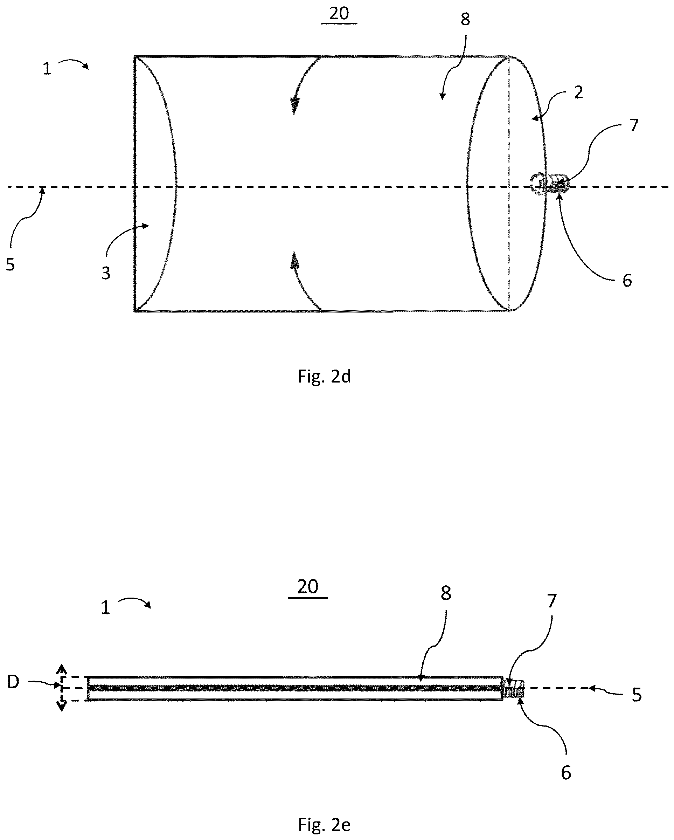

In Figur 2d ist mit Richtungspfeilen angedeutet, dass die Hälften, in welche die Erstreckungsachse 5 den Rundbodensack 1 unterteilt, zur Erstreckungsachse 5 hin von zwei Seiten her aufgerollt werden. Das Aufrollen verläuft dabei jeweils in etwa um eine parallel zur Erstreckungsachse 5 verlaufende Achse.

Der so aufgerollte Rundbodensack 1 ist in Figur 2e dargestellt. Es handelt sich hierbei mithin um ein Ausführungsbeispiel für einen erfindungsgemäßen Rundbodensack. Parallel zu der Erstreckungsachse liegt der Rundbodensack 1 als zwei verbundene, gegenläufig spiralförmig aufgerollte Wülste vor. Senkrecht zur Erstreckungsachse 5 weist der Rundbodensack 1 eine maximale Dicke auf, welche vorliegend kleiner als 56mm ist, was einem üblichen Durchmesser D eines Spundlochs 11 entspricht. Anhand des Orientierungselements 7 ist nun erkennbar bezüglich welcher Auflageebene 20 der Rundbodensack 1 aufgerollt wurde.

Figur 3 zeigt ein Ausführungsbeispiel des erfindungsgemäßen Verfahrens zum Einbringen eines Rundbodensacks 1 in ein Spundfass 10 mit einem Spundloch 11. Der Rundbodensack 1 wurde wie zuvor beschrieben gefaltet und gerollt, bzw. hergerichtet. Er wird entlang seiner Erstreckungsrichtung 5 durch das Spundloch 11 geführt, bis sich der Füllstutzen 6 auf Höhe des Spundlochs 11 befindet. Der Füllstutzen 6 weist umlaufende Wülste auf, mittels derer er an Rillen des Spundlochs 11 befestigt wird. Dem Vorsprung am Füllstutzen 6, bzw. dem Orientierungselement 7, wird entnommen, wie der Rundbodensack 1 bezüglich einer geometrischen Mitte des Spundfasses 10 orientiert ist. Um ein optimales Entfalten (und Entrollen) zu ermöglichen, soll der Rundbodensack 1 sich in Richtung der geometrischen Mitte des Spundfasses entfalten. Dazu wird der Füllstutzen 6 rotiert, bis der Vorsprung zu einem Mittelpunkt des Oberbodens des Spundfasses weist. In diesem Zustand ist der Rundbodensack 1 bereit befüllt zu werden, sodass er sich dabei zuverlässig entfalten kann. Alternativ kann das Spundloch 11 ein gegenstückiges Orientierungselement aufweisen, beispielsweise eine Kerbe, in die der Vorsprung 7 einrastet.

Figur 4 zeigt eine Schnittansicht des Spundfasses mit einer inneren Fasshöhe 12 und dem befüllten Rundbodensack 1, bei der der Rundbodensack 1 erfolgreich entfaltet wurde. Der Anschaulichkeit halber ist der Rundbodensack 1 dabei so dargestellt, dass er den Unterboden des Spundfasses 10 nicht berührt, was allerdings in der Realität zu einem Reißen des Rundbodensacks 1 führen würde. Realiter kleidet der Rundbodensack 1 das Fassinnere vollständig aus. Hierbei wäre jedoch visuell eine Unterscheidbarkeit zwischen einer Wand des Spundfasses 10 und dem Rundbodensack 1 erschwert, sodass die vorliegende schematische Darstellungsweise gewählt wurde.

### Bezugszeichenliste

- 1: Rundbodensack
- 2: Oberboden
- 3: Unterboden
- 4: Öffnung
- 5: Erstreckungsachse
- 6: Füllstutzen
- 7: Orientierungselement
- 8: Mantel
- 10: Spundfass
- 11: Spundloch
- 12: innere Fasshöhe
- 20: Auflageebene

## Patentansprüche

1. Verfahren zum Vorbereiten eines Rundbodensacks (1) für ein Spundfass (10) mit einer inneren Fasshöhe (12), umfassend die folgenden Verfahrensschritte:
- Bereitstellen eines flexiblen geschlossenen Rundbodensacks (1) mit einem Oberboden (2), einem Unterboden (3) und einem Mantel (8), wobei der Oberboden (2) und der Unterboden (3) mittels des Mantels (8) verbunden sind und der Oberboden (2) eine Öffnung (4) aufweist;
- Flaches Ausrichten des Rundbodensacks (1) auf einer Auflageebene (20), wobei der Rundbodensack (1) sich im Wesentlichen entlang einer Erstreckungsachse (5) parallel zur Auflageebene (20) erstreckt, wobei die Erstreckungsachse (5) durch die Öffnung (4) sowie durch den Unterboden (3) verläuft und den Rundbodensack (1) in zwei im Wesentlichen gleich große Hälften unterteilt;
- Falten des Rundbodensacks (1) senkrecht oder winklig zu der Erstreckungsachse (5), sodass der flach ausgerichtete Rundbodensack (1) entlang der Erstreckungsachse (5) kürzer als die innere Fasshöhe (12) ist;
- Aufrollen beider Hälften des Rundbodensacks (1) um jeweils eine parallel zur Erstreckungsachse (5) verlaufende Achse zur Erstreckungsachse (5) hin.

2. Verfahren nach Anspruch 1,
wobei der Rundbodensack (1) derart senkrecht oder winklig zu der Erstreckungsachse (5) gefaltet wird, dass der flach ausgerichtete Rundbodensack (1) entlang der Erstreckungsachse (5) kürzer als eine innere Fasshöhe von 865 mm, und besonders bevorzugt 85 cm lang oder kürzer ist.

3. Verfahren nach einem der vorangegangenen Ansprüche,
wobei der Oberboden (2) derart drapiert wird, dass Flächennormalen zumindest zweier Bereiche des Oberbodens (3) in entgegengesetzte Richtungen bezogen auf die Auflageebene (20) weisen und die Öffnung (4) in etwa parallel zu der Erstreckungsachse (5) ausgerichtet ist.

4. Verfahren nach einem der vorangegangenen Ansprüche,
wobei der Unterboden (3) senkrecht oder winklig zu der Erstreckungsachse (5) gefaltet wird, sodass Flächennormalen zumindest zweier Bereiche des Unterbodens (3) in entgegengesetzte Richtungen bezogen auf die Auflageebene (20) weisen.

5. Verfahren nach einem der vorangegangenen Ansprüche,
wobei der Rundbodensack (1) so aufgerollt wird, dass er eine maximale Dicke senkrecht zur Erstreckungsachse (5) aufweist, die kleiner ist als ein Durchmesser (D) eines Spundlochs (11) eines Spundfasses (10), und bevorzugt kleiner als 56mm.

6. Verfahren nach einem der vorangegangenen Ansprüche,
wobei vor dem Falten des Rundbodensacks (1) ein Füllstutzen (6) oder ein Schlauchstück an der Öffnung (4) befestigt wird, und bevorzugt, dass der Füllstutzen (6) oder das Schlauchstück durch Schweißen oder Kleben an der Öffnung (4) befestigt wird.

7. Verfahren nach Anspruch 6,
wobei vor dem Befestigen des Füllstutzens (6) oder des Schlauchstücks ein Verstärkungsring um die Öffnung (4) herum stoffschlüssig angebracht, insbesondere angeschweißt oder angeklebt, wird, und bevorzugt, dass ein Verstärkungsring aus demselben Material verwendet wird wie der Rundbodensack (1).

8. Rundbodensack für ein Spundfass (10),
wobei der Rundbodensack (1) gemäß dem Verfahren nach zumindest einem der Ansprüche 1 bis 7 hergerichtet wurde.

9. Rundbodensack nach Anspruch 8,
wobei der Rundbodensack (1) aus Kunststofffolie, bevorzugt aus einem Polyolefin, besonders bevorzugt aus LDPE, gefertigt ist.

10. Rundbodensack nach einem der Ansprüche 8 oder 9,
wobei der Rundbodensack (1) aus Mehrschichtfolien, insbesondere Coextrusionsfolien, oder Barrierefolien mit beispielsweise einer Metallfolie als Barriereschicht, oder allgemein als Verbundfolie, insbesondere als Folienlaminat gefertigt ist.

11. Rundbodensack nach einem der Ansprüche 8 bis 10,
wobei die Kunststofffolie eine Dicke von weniger als 300 µm, besonders bevorzugt von 100 µm oder weniger, und/oder ein spezifisches Gewicht von weniger als 1,2 kg/m²/s², insbesondere weniger als 0,93 kg/m²/s², aufweist.

12. Rundbodensack nach einem der Ansprüche 8 bis 11,
wobei der Rundbodensack (1) einen Füllstutzen (6) oder ein Schlauchstück an der Öffnung (4) aufweist und der Füllstutzen (6) oder das Schlauchstück zumindest ein Orientierungselement (7) besitzt, anhand dessen eine Orientierung des Rundbodensacks (1) senkrecht zu der Erstreckungsrichtung (5) ablesbar ist.

13. Verfahren zum Einbringen eines geschlossenen Rundbodensacks in ein Spundfass (10) mit einem Spundloch (11) und einer inneren Fasshöhe (12), mit folgenden Verfahrensschritten:
- Bereitstellen eines flexiblen geschlossenen Rundbodensacks (1) mit einem Oberboden (2), einem Unterboden (3) und einem Mantel (8), wobei der Oberboden (2) und der Unterboden (3) mittels des Mantels (8) verbunden sind und der Oberboden (2) eine Öffnung (4) aufweist;
- Flaches Ausrichten des Rundbodensacks (1) auf einer Auflageebene (20), wobei der Rundbodensack (1) sich im Wesentlichen entlang einer Erstreckungsachse (5) parallel zur Auflageebene (20) erstreckt, wobei die Erstreckungsachse (5) durch die Öffnung (4) sowie durch den Unterboden (3) verläuft und den Rundbodensack (1) in zwei im Wesentlichen gleich große Hälften unterteilt;
- Falten des Rundbodensacks (1) senkrecht oder winklig zu der Erstreckungsachse (5), sodass der flach ausgerichtete Rundbodensack (1) entlang der Erstreckungsachse (5) kürzer als die innere Fasshöhe (12) ist;
- Aufrollen beider Hälften des Rundbodensacks (1) um jeweils eine parallel zur Erstreckungsachse (5) verlaufende Achse zur Erstreckungsachse (5) hin;
- Führen des hergerichteten Rundbodensacks (1) durch das Spundloch (11), wobei der Rundbodensack (1) abhängig von dem Orientierungselement (7) in dem Spundfass (10) ausgerichtet wird.

14. Verfahren nach Anspruch 13,
wobei der Rundbodensack (1) durch Zusammenwirken des Füllstutzens (6) mit dem Spundloch (11) an dem Spundloch (11) gehalten wird.

15. Verfahren nach einem der Ansprüche 13 oder 14,
wobei das Spundfass (10) durch das Spundloch (11) befüllt wird, indem der eingebrachte und ausgerichtete Rundbodensack (1) so befüllt wird, dass er sich in das Fassinnere des Spundfasses (10) entfaltet und das Fassinnere nach dem Befüllen auskleidet.
